# EUROPÄISCHE PATENTANMELDUNG

(11) **EP 1 172 601 A1**
(43) Veröffentlichungstag der Anmeldung: **16.01.2002**
(21) Anmeldenummer: 01115082.8
(22) Anmeldetag: 21.06.2001
(51) Int. Cl.: F16N 7/24

(54) **Schmiermittelverteiler**

(30) Priorität: 12.07.2000 DE 10033825
(71) Anmelder: Hofmann, Arno, 4730 Raeren (BE)
(72) Erfinder: Hofmann, Arno, 4730 Raeren (BE)
(74) Vertreter: Quermann, Helmut, Dipl.-Ing.

(57) **Zusammenfassung**

Die Erfindung schlägt einen Schmiermittelverteiler (20) vor, der mindestens zwei Gleitflächen (1, 3) besitzt, die die mit Schmiermittel zu beaufschlagende Oberfläche (11) eines sich relativ zum Schmiermittelverteiler bewegenden Bauteils (10) berühren und sich zwischen jeweils zwei Gleitflächen (1, 3) eine Nut (2) befindet, wobei die Nut (2) über mindestens eine Schmiermittelzuführung (7) verfügt, wobei der Schmiermittelverteiler senkrecht zur Oberfläche (11) beweglich ist.

Ein derartiger Schmiermittelverteiler findet Anwendung an Gleitelementen (zum Beispiel Kolben, Schieber, Ventile) von Wärmekraftmaschinen oder Verdichtern, bei denen die Nachteile einer Aufbringung von Schmiermittel auf Gleitflächen durch Schmiermitteltauchbäder, Schmiermittelaufspritzung oder Schmiermittelvernebelung vermieden werden soll, sondern der dosierten Schmiermittelzuführung und der sich anschließenden mechanischen Verteilung des Schmiermittels auf der zu schmierenden Oberfläche der Vorzug gegeben werden soll.

## Beschreibung

Die Erfindung schlägt eine Vorrichtung, hier Schmiermittelverteiler genannt, gemäß den Merkmalen des Patentanspruches 1 vor.

Der Schmiermittelverteiler wird nachfolgend herkömmlichen Schmierverfahren gegenübergestellt, deren funktioneller Nachteil er aufgrund seiner Konstruktion vermeidet. Der Schmiermittelverteiler ermöglicht, eine genau erfaßbare Menge flüssigen Schmiermittels ohne Verluste einer zu schmierenden Oberfläche zuzuführen, und das Schmiermittel anschließend in einer gewünschten Schmierfilmdicke zu verteilen.

Der Schmiermittelverteiler schafft somit die Voraussetzung, einer zu schmierenden Oberfläche gerade die Menge bzw. Rate an Schmiermittel zuzuführen, die aus tribologischen Gründen notwendig ist. Insbesondere bei nicht geschlossenen Schmiermittelkreisläufen (z.B. Verlustschmierung) ermöglicht die Verwendung des Schmiermittelverteilers eine Minimierung des Schmiermitteldurchlaufs bzw. Schmiermittelverbrauchs.

Herkömmliche Verfahren zum Aufbringen von flüssigem Schmiermittel auf Oberflächen umfassen die Schmiermittelaufspritzung, die Schmiermittelvernebelung und Schmiermitteltauchbäder. Diese Verfahren zur Schmierung von Oberflächen besitzen bezüglich der dosierten Schmiermittelzuführung, der verlustfreien Schmiermittelaufbringung auf Oberflächen und der gleichmäßigen Schmiermittelverteilung Nachteile gegenüber der Wirkungsweise des erfindungsgemäßen Schmiermittelverteilers. Diese Nachteile der herkömmlichen Schmierverfahren stellt folgende Tabelle dem Schmiermittelverteiler gegenüber.

| | Schmiermittelverteiler | Schmiermittelaufspritzung | Schmiermittelvernebelung | Schmiermitteltauchbad |
|---|---|---|---|---|
| Dosierte Schmiermittelzuführung | ja | ja | ja | nein |
| Dosierte Schmiermittelaufbringung auf die zu schmierende Oberfläche | ja | nein | nein | nein |
| Gleichmäßige Schmiermittelverteilung auf der geschmierten Oberfläche | ja | nein | nein | nein |
| Vermeidung der Gefahr von Schmiermittelabwurf von der zu schmierenden Oberfläche durch ungleichmäßigen Schmiermittelauftrag | ja | nein | nein | nein |
| Zugeführte Schmiermittelmenge entspricht der auf der Oberfläche gleichmäßig verteilten Schmiermittelmenge | ja | nein | nein | nein |

Aus der DE 299 20 809 U1 ist ein Schmiermittelverteiler mit den Merkmalen des Oberbegriffes des Patentanspruches 1 bekannt. Dieser findet im Bereich der Montagetechnik für Lagerbauteile Verwendung, die vor der Verarbeitung mit einer Fettschicht zu versehen sind. Beschrieben ist ein Schmiermittelverteiler zum Aufbringen von Schmiermittel auf die Oberfläche eines länglichen Bauteiles, mit einer Schmiermittelversorgung, wobei ein Speicherraum vorgesehen ist, der in Längsrichtung eine gleichmäßige Kontur hat, die an die Oberfläche der zu schmierenden Bauteile angepasst ist. Ein Schmiermittelversorgungsbereich ist als umlaufende Nut im Bereich des Förderweges der Bauteile innerhalb des Speicherraumes angeordnet und mit einer Schmiermittelversorgung verbunden. Der Schmiermittelverteiler ist nicht beweglich. Dies ist wegen seines beschriebenen Wirkprinzipes auch nicht erforderlich.

Vorrichtungen zum Auftrag von pastösen Massen, insbesondere von Fett, auf Oberflächen, sind beispielsweise aus der JP 5-346 121 A, CH 597 928 A5, US 5 647 907 A und DE 196 52 289 A1 bekannt. Letzte Schrift zeigt einen Verteiler, der durch die auf ihn wirkende, senkrecht zur Oberfläche stehende Kraft auf das Bauteil gedrückt wird, wobei diese Kraft pneumatisch erzeugt wird.

Der erfindungsgemäße Schmiermittelverteiler kann Anwendung finden an Gleitelementen (z.B. Kolben, Schieber, Ventile) von Wärmekraftmaschinen oder Verdichtern, bei denen die Nachteile einer Aufbringung von Schmiermittel auf Gleitflächen durch Schmiermitteltauchbäder, Schmiermittelaufspritzung oder Schmiermittelvernebelung vermieden werden sollen, sondern der dosierten Schmiermittelzuführung und der sich anschließenden mechanischen Verteilung des Schmiermittels auf der zu schmierenden Oberfläche der Vorzug gegeben werden soll.

Vorteilhafte Weiterentwicklungen des Schmiermittelverteilers sind in den Unteransprüchen und der Figurenbeschreibung beschrieben und näher erläutert. In den Figuren ist die Erfindung anhand mehrerer Ausführungsbeispiele dargestellt, ohne hierauf beschränkt zu sein. Es zeigt:
- Figur 1A: eine Ansicht eines ringförmigen Schmiermittelverteilers mit ebener Gleitfläche,
- Figur 1B: eine Anordnung des in ein Gehäuse eingesetzten Schmiermittelverteilers, der mit einem bewegten Bauteil zusammenwirkt, wobei der Schmiermittelverteiler entsprechend der Ausführungsform nach Figur 1A ausgebildet und in einer Schnittführung gemäß der Linie I-I dargestellt ist,
- Figur 2A: eine Ansicht eines ringförmigen Schmiermittelverteilers mit konkaver Gleitfläche,
- Figur 2B: einen Schnitt durch den in Figur 2A gezeigten Schmiermittelverteiler gemäß der dortigen Linie II-II,
- Figuren 3 bis 10: abgewandelte Gestaltungen des Schmiermittelverteilers,
- Figur 11: einen Schnitt durch eine im Querschnitt besonders gestaltete Variante eines Schmiermittelverteilers, gezeigt bei dessen Zusammenwirken mit dem Gehäuse und dem bewegten Bauteil, sowie
- Figur 12: die Ausführungsform eines Schmiermittelverteilers, der hin- und herbewegt wird.

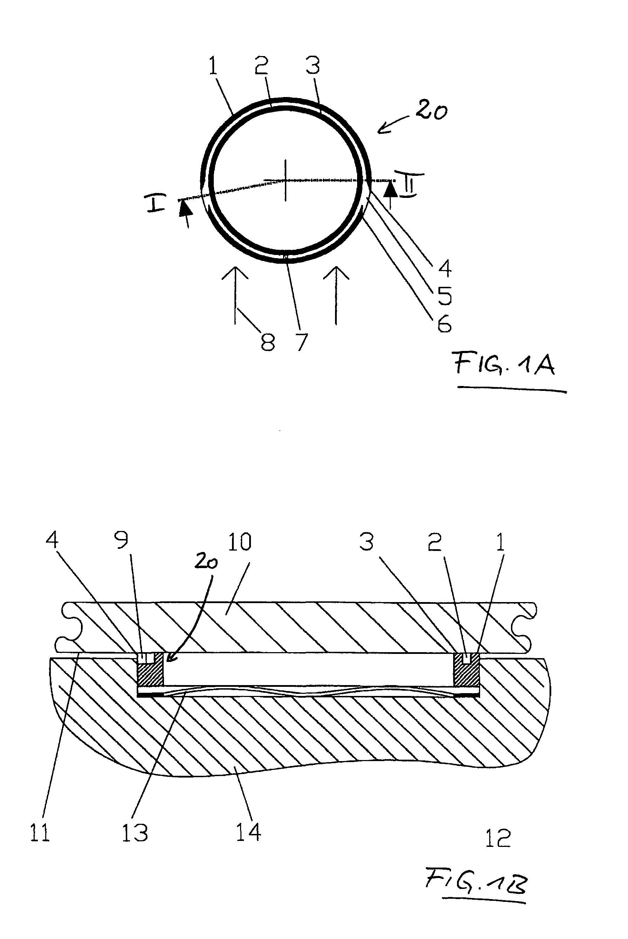

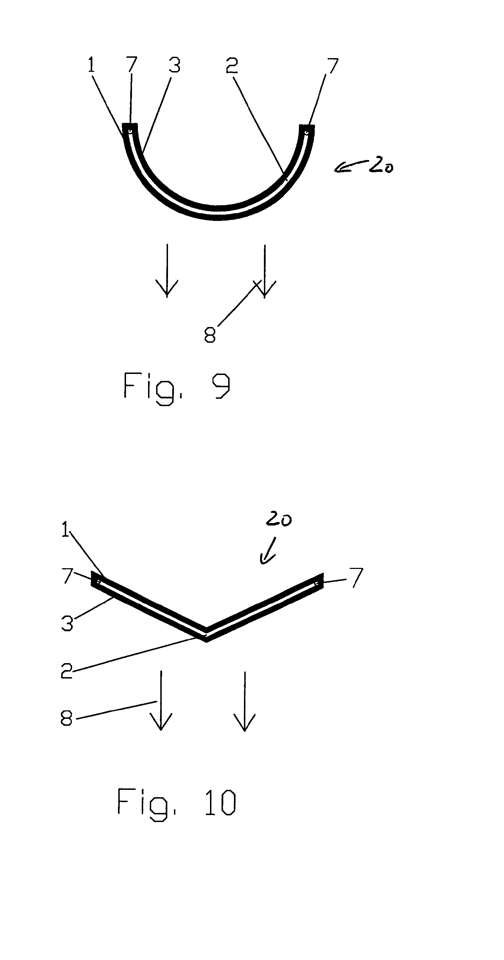

Der Schmiermittelverteiler 20 (Figur 1 bis Figur 12) ist eine Vorrichtung, die zwischen deren Flächen 1 und 3, die die Berührungsflächen zu der zu schmierenden Oberfläche 11 eines sich in der Ebene der Oberfläche 11 relativ zum Schmiermittelverteiler bewegenden Bauteils 10 bilden, eine Nut besitzt. Durch die Anlage des Bauteils 10 auf den Flächen 1 und 3 wird die Nut 2 verdeckt und besitzt somit den Charakter eines Kanals, der über mindestens eine Zuführung 7 mit Schmiermittel gefüllt werden kann.

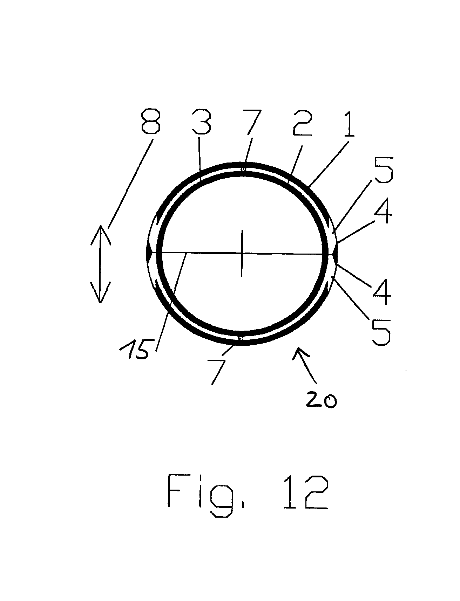

Der Schmiermittelverteiler 20 ist in einer senkrechten Komponente zur Oberfläche 11 im Gehäuse 14 beweglich geführt, entsprechend seiner Führungsrichtung 12. Das Schmiermittel, ausgehend von der Schmiermittelzuführung 7, erfährt nur dann eine zur Bewegungsrichtung 8 des Bauteils 10 quer gerichtete Ausbreitung, wenn die Längsrichtung der Nut 2 sowohl eine parallele, als auch eine quer gerichtete Komponente bezüglich der Bewegungsrichtung 8 des Bauteils 10 besitzt. Die Bewegungsrichtung 8 kann gleichbleibend (Figuren 1 bis 11), aber auch hin und her gehend sein (Figur 12). Im letzteren Fall ist der Schmiermittelverteiler 20 um eine Spiegelachse 15, die quer zur Bewegungsrichtung 8 liegt, symmetrisch gestaltet.

Demzufolge entscheiden die Nutgeometrie 2, die Lage der Schmiermittelzuführung(en) 7 und die Bewegungsrichtung 8 des Bauteils 10, welche Zonen der Oberfläche 11 mit Schmiermittel benetzt werden.

Die Beweglichkeit des Schmiermittelverteilers 20 im Gehäuse 14 senkrecht zur Oberfläche 11 des Bauteils 10 ermöglicht dem Schmiermittelverteiler 20, bei Abstandsänderungen zwischen dem Bauteil 10 und dem Gehäuse 14, der Oberfläche 11 des Bauteils 10 zu folgen. Somit kann das Bauteil 10 grundsätzlich in beliebigem Abstand vom Gehäuse 14 geführt werden. Abstandsänderungen zwischen diesen Bauteilen können beispielsweise auch durch thermische und/oder elastische Deformationen auftreten. Diese Beweglichkeit des Schmiermittelverteilers 20 gegenüber dem Bauteil 10 ermöglicht, die Schmierfilmdicke, die sich aufgrund der Relativbewegung 8 zwischen Bauteil 10 und dem Schmiermittelverteiler 20 an dessen Gleitflächen 1 und 3 einstellt, durch eine auf den Schmiermittelverteiler 20 wirkende und auf die Oberfläche 11 senkrecht stehende Kraft zu variieren.

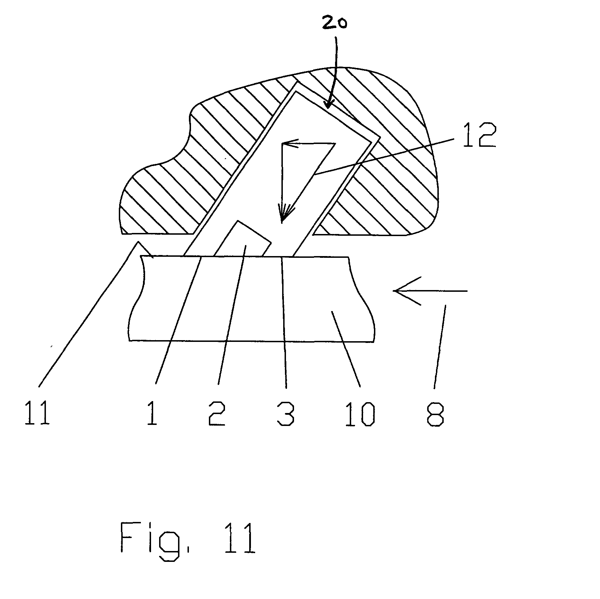

Diese Kraft kann durch eine vom Schmiermittelverteiler separate Vorrichtung, z.B. Feder 13 erzeugt werden und/oder durch die Geometrie des Schmiermittelverteilers 20 einschließlich seiner Führungsrichtung 12 (Figur 11). Hat die Führungsrichtung 12 eine parallele Komponente zur Bewegungsrichtung 8 des Bauteils 10, so erfährt in Abhängigkeit von der Relativgeschwindigkeit des Bauteils 10, der Schmiermittelverteiler 20 senkrecht zur Oberfläche 11 eine Kraft, die zur Regelung der Schmierfilmdicke genutzt werden kann.

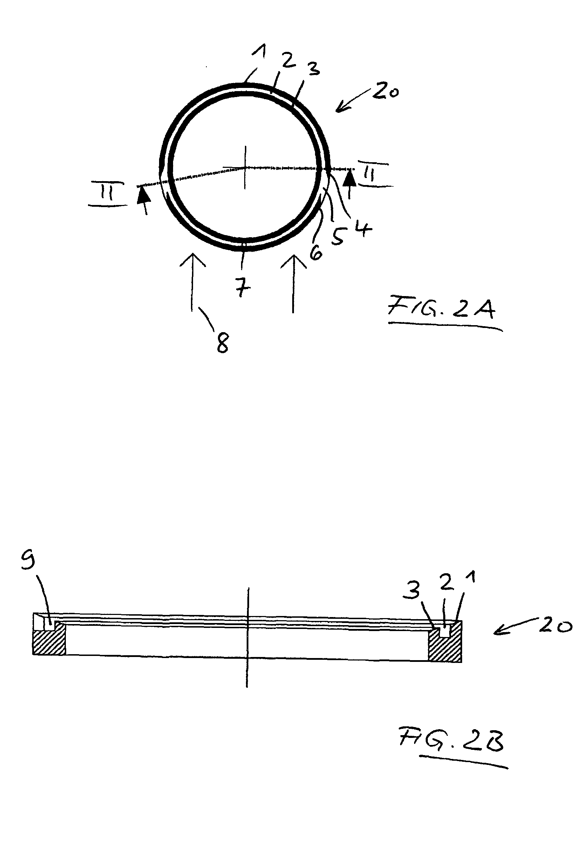

Der Schmiermittelverteiler 20 kann die Eigenschaft besitzen, Schmiermittel, das aus den zu schmierenden Zonen der Gleitfläche 11 entwichen ist, einzufangen und den zu schmierenden Zonen der Gleitfläche 11 wieder zuzuführen (Figur 1 und Figur 2). Durch die Aussparung 5 in der Lauffläche 1 wird außerhalb sich der Nut 2 befindendes Schmiermittel an der Kante 4 in die Nut 2 zurückgeführt.

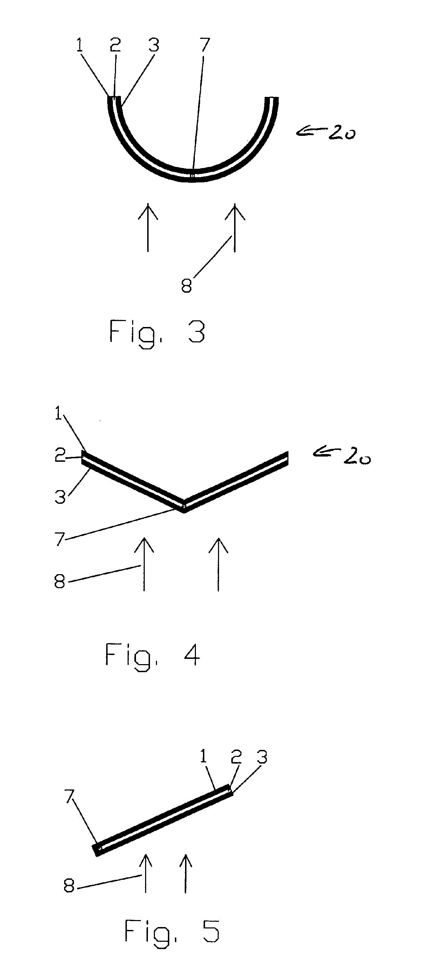

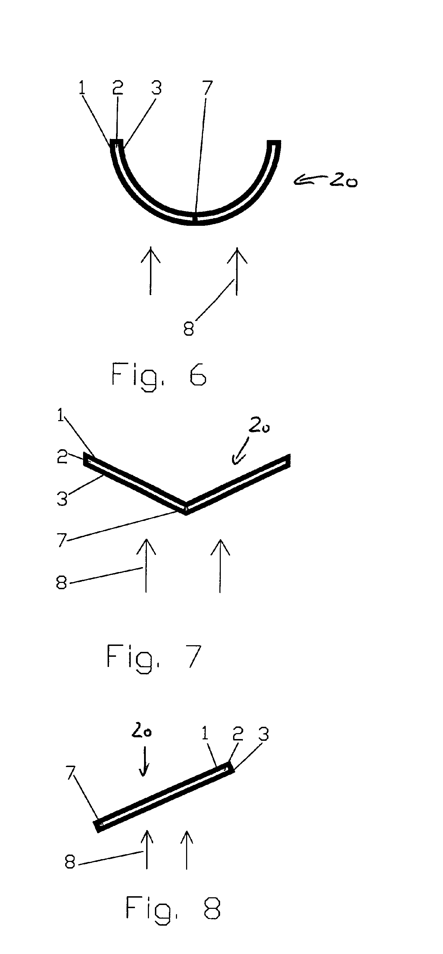

Die Figuren 3, 6 und 9 zeigen jeweils einen halbringförmigen Schmiermittelverteiler 20, die Figuren 4, 5, 7, 8, 10 jeweils einen leistenförmigen Schmiermittelverteiler 20, wobei der jeweilige Schmiermittelverteiler 20 entweder V-förmig aus zwei geraden Leistenabschnitten oder gerade ausgebildet ist. Die Nut 2 des Schmiermittelverteilers 20 ist offen (Figuren 3 bis 5) oder geschlossen (Figuren 6 bis 10) ausgebildet. Es sind jeweils ein oder mehrere Schmiermittelzuführungen 7 vorgesehen, die in einem geschlossenen Endbereich der Nut 2 und/oder, bezogen auf die Länge der Nut, etwa auf halber Länge der Nut angeordnet sind.

## Patentansprüche

1. Schmiermittelverteiler (20), der mindestens zwei Gleitflächen (1, 3) besitzt, die die mit Schmiermittel zu beaufschlagende Oberfläche (11) eines sich relativ zum Schmiermittelverteiler (20) bewegenden Bauteils (10) berühren und sich zwischen jeweils zwei Gleitflächen (1, 3) eine Nut (2) befindet, wobei die Nut (2) über mindestens eine Schmiermittelzuführung (7) verfügt, **dadurch gekennzeichnet, dass** der Schmiermittelverteiler (20) senkrecht zur Oberfläche (11) beweglich ist.

2. Schmiermittelverteiler nach Anspruch 1, wobei die Gleitflächen (1, 3) der Kontur der Oberfläche (11) angepaßt sind.

3. Schmiermittelverteiler nach Anspruch 2, wobei die Kontur der Oberfläche (11) konkav oder konvex kugelförmig, eben oder zylinderförmig ist.

4. Schmiermittelverteiler nach einem der Ansprüche 1 bis 3, wobei die Nut (2) durch Auflage des Schmiermittelverteilers (20) auf der Fläche (11) des Bauteils (10) radial geschlossen ist.

5. Schmiermittelverteiler nach einem der Ansprüche 1 bis 4, wobei die Nut (2) umlaufend (Figuren 1 und 2), offen (Figuren 3 bis 5) oder geschlossen (Figuren 6 bis 10) ist.

6. Schmiermittelverteiler nach einem der Ansprüche 1 bis 5, wobei der Schmiermittelverteiler (20) durch eine auf ihn wirkende, senkrecht zur Oberfläche (11) stehende Kraft auf das Bauteil (10) gedrückt wird.

7. Schmiermittelverteiler nach Anspruch 6, wobei die den Schmiermittelverteiler (20) auf das Bauteil (10) drückende Kraft durch eine Vorrichtung mechanisch (Feder 13) und/oder pneumatisch und/oder hydraulisch und/oder elektromagnetisch erzeugt wird.

8. Schmiermittelverteiler nach Anspruch 6 oder 7, wobei die auf den Schmiermittelverteiler (20) wirkende, senkrecht zur Oberfläche (11) stehende Kraft durch die Geometrie und Führungsrichtung des Schmiermittelverteilers (20) in Zusammenwirken mit der Relativgeschwindigkeit des Bauteils (10) erzeugt wird (Figur 11).

9. Schmiermittelverteiler nach Anspruch 8, wobei die Führungsrichtung des Schmiermittelverteilers (20) eine senkrechte und parallele Komponente bezüglich der Bewegungsrichtung (8) des Bauteils (10) besitzt.

10. Schmiermittelverteiler nach einem der Ansprüche 1 bis 9, wobei aus der Nut (2) entwichenes Schmiermittel über mindestens eine Aussparung (5) in der Gleitfläche (1) der Nut (2) wieder zugeführt wird.
